(19) Europäisches Patentamt European Patent Office Office européen des brevets

(11) **EP 1 918 752 A1**

(12) **EUROPEAN PATENT APPLICATION**

(43) Date of publication:
**07.05.2008 Bulletin 2008/19**

(51) Int Cl.:
*G02B 21/00* (2006.01)  *G01J 1/42* (2006.01)

(21) Application number: **06291742.2**

(22) Date of filing: **06.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **Institut Curie
75005 Paris (FR)**

• **Centre National de la Recherche Scientifique
75794 Paris Cedex 16 (FR)**

(72) Inventor: **Amblard, François
75005 Paris (FR)**

(74) Representative: **Pontet, Bernard et al
Pontet Allano & Associés S.E.L.A.R.L.
25, rue Jean-Rostand
Parc Club Orsay Université
91893 Orsay Cédex (FR)**

(54) **Method and apparatus for measuring optical power of a light beam produced in a microscope**

(57)   The invention relates to a method for measuring optical power of a light beam produced in a microscope, said microscope being equipped in standard with a slot intended to receive interposition slides; the method comprising the step of measuring the optical power by inserting a removable measuring probe in said slot, near the back pupil of the microscope objective. Moreover, the power available on a sample reached by the light beam is determined as a function of the optical power detected by said measuring probe together with the pupil diameter and the transmission coefficient of the objective.

FIG. 2

EP 1 918 752 A1

## Description

TECHNICAL FIELD

The present invention relates to a method and an apparatus for measuring optical power of a light beam produced in a microscope.

BACKGROUND OF THE INVENTION

Various sources of light are used in microscopy according to applications concerned : halogenous lamp, mercury/Xenon lamp, lasers, flash lamps, photodiodes... The power of these sources becomes a problem when it is excessive, insufficient, or fluctuating, but these problems appear only when the other elements of the chain of imagery do not suffice to compensate for the problem of power. One can quote as an example the following cases, which one meets in microscopy of biological object :

- the excitation light source is weak, but the used camera is of good quality and makes it possible despite everything to obtain images of good quality : is the power used reasonable? How to compare the experimental conditions of the imagery with those of other microscopes, to decide if the source employed abnormally weak, is badly regulated, or a better compromise is not possible with a better illumination and a less sensitive camera;
- the experimenter does not see the cells in fluorescence only by using a power such as the cells do not resist the induced photo-toxicity; Is it because of a chain of badly regulated collection? Can one hope to improve the experiment with a less intensity of excitation and a camera of better quality?
- in confocal microscopy, one observes abnormal structures in the image : are they due to fluctuations of the intensity of the laser in the course of time, or a problem of the scanner?
- in confocal microscopy still, the imagery requires an abnormally strong intensity : does it correspond to the need for injecting a strong intensity in the objective, or the simple consequence of a disordered state of the source, of control power device, or path of excitation bringing the intensity in the objective, even of a diameter of beam larger than the pupil of entry? In the first case, one will seek a solution on the side of the sample or detection, while in the second case, one will examine the instrument upstream excitation.

Apart from the problematic circumstances that we have just evoked, and which can belong sometimes to the development of an experiment, sometimes of a step diagnosis, it is circumstances where the measurement of power is necessary for a complete definition of the experiment, a better control of photophysic, or in routine for experimental reproducibility.

Lastly, for the experiments implementing a photomanipulation (photoactivation, FRAP, FCS) the condition to be quantitative is to precisely know the power sent on the sample, without what reproducibility is not possible, and the comparison between experimental results very difficult. The need exists to measure almost on a daily basis the power used, and in particular to know the curve of power according to the instruction given to the modulator (acousto-optics, electro-optics, polarized blade) which controls it. Indeed, one often observed, when the optical power is controlled by a modulator, that the delivered power does not correspond to the "ordered" power, because of a non-linear behavior between order and answer.

More often still, the power is ordered in the form of a percentage of the laser power, which is itself not or badly known precisely. In the best cases, some confocal microscopes propose an internal calibration by a photodiode which indicates the power detected in general in the scan head, without knowing the effective power in the microscope objective for example.

Moreover, due to the importance of the sample - fluorescence of low intensity, limitation of photo-toxicity, controls of required effects photophysic - it is particularly interesting to know the optical power introduced into the sample. In this respect, better place for a measurement is the sample itself.

The point of measurement which is the plan of the sample is accessible in two distinct ways. On the one hand, it is possible to employ a "standard" material of fluorescence of which susceptibility is known, like a fluorescent plastic blade. Such a measurement makes it possible to test in a reproducible way the effectiveness of the whole of the chain "excitation-detection" without however quantitatively giving access to the relative merits of the excitation and detection. Moreover, this measurement forces to remove the sample, which can represent a disadvantage. Another way of proceeding is to directly measure the luminous power in the focal plan.

This approach, in an area where the light is strongly focused, poses several problems of detection: measurement, for example on the surface of a silicon photodiode type, will depend on the distribution of aperture, the type of required optical coupling - water or oil. The strong concentration of the light, for example in the case of a focused laser, can lead to a saturation of the detector, and a non-linearity of measurement. The alternative solution with a photodiode is a bolometer, but the standard sensors of this type are cumbersome.

In the prior art, it is known the document US 2004/0238719 which discloses an apparatus for controlling optical power in a microscope. The apparatus includes a measuring device for measuring the optical power, and a control unit for controlling a high-frequency source as a function of the measured optical power so as to achieve a selectable level of the optical power. The measuring device can be placed between a scanning optical system and a tube optical system. In order to perform precise control of the optical power, document US 2004/0238719 advocates placing the measuring device directly upstream from the sample.

This method has the problem of the second way as described above.

SUMMARY OF THE INVENTION

The object of the present invention is therefore to provide a method for easily measuring the optical power in a microscope without being obliged to dismantle this microscope nor remove the sample.

Another object of the present invention is a new method allowing manufacturers, engineers and maintenance personnel for the diagnosis, and users for the development of their experiments, for the benefit of the optimization of the experimental conditions, or to meet a need for comparison or standardization of performances. It is a further object of this invention to provide a new toll for quality control for installing microscope in order to comply with microscope manufacturers standards. It is still a further object of this invention to provide a new tool for medical standard calibration, i.e. a tool which permits to certify a microscope with respect to medical predetermined standards.

Another object of the present invention is a method for measuring precisely the optical power reaching the sample disposed on a microscope.

At least one of the above-mentioned object is achieved with a method according to the present invention for measuring optical power of a light beam produced in a microscope, said microscope being equipped in standard with a slot intended to receive interposition slides. The method comprises the step of measuring the optical power by inserting a removable measuring probe in said slot, near the back pupil of the microscope objective.

With the method of the present invention, light beam is easily accessible because the measuring probe is inserted in a predetermined standard slot. Indeed, most of laboratory microscopes are equipped with such a slot for receiving a Nomarski type contrast device, or polarizer/analyzer. Contrary to the prior art, the detection place is well predetermined and always the same so that comparative measurements are possible. One can use past and future microscopes without requiring change within microscopes. As a matter of fact, internal change of microscopes as considered in prior art, results in increase in manufacturing cost.

Placing the measuring probe near the back pupil of the objective allows reliable measurements. In this place, the light is injected under a weak incidence and the strength of said light is relatively homogenous.

According to an advantageous embodiment of the present invention, the power $P_{sample}$ available on a sample reached by the light beam is the product of the optical power $P_{detector}$ detected by said measuring probe through a diaphragm which diameter corresponds to the objective back pupil diameter, and the transmission coefficient t of the objective :

$$P_{sample} = P_{detector} \times t$$

The present invention is notably remarkable by the fact that the measuring probe is arranged in a place that permits to assess the optical power on the sample.

Advantageously, the measuring probe comprises a detection device arranged in the optical path of the light beam when the measuring probe is inserted in the microscope slot. This detection device may comprises a photodetector such as a photodiode.

According to the improvement of the invention, the measuring probe comprises a miniaturized primary circuit intended to send the pre-amplified measuring signal from the detection device to an external unit; said external unit being capable of controlling said miniaturized primary circuit and processing measuring signal.

This miniaturized primary circuit may be an electronic circuit disposed on the measuring probe and configured to receive signal generated by the photodiode. A preliminary processing can be made on said signal. For example, the miniaturized primary circuit may comprise a linear transimpedance pre-amplifier and/or a logarithmic pre-amplifier in order to enlarge dynamic range of said detection device. The signal generated by the logarithmic or linear pre-amplifier is received by the external unit which is configured to process said signal and to display the value of the optical power detected.

Moreover, in order to avoid any optical saturation on the detection device, the method according to the present invention further comprises the step of placing a removable attenuator upstream from the measuring probe, in the optical path of the light beam. Said attenuator may be a removable absorbing neutral filter disposed in front of the detection device.

Advantageously, to further improve the measure precision, the method of the present invention further comprises the step of adjusting said diaphragm arranged on the detection device of said measuring probe in order to fit said detection device to the objective pupil diameter. The diaphragm may be a set of rings of different size or an adjustable ring.

The measuring probe together with all active components disposed on it are connected to the external unit which electrically supplies said measuring probe. Advantageously, the external unit may generate an analog measuring signal which is suitable for an oscilloscope. The method may also comprise the step of calibrating the measuring probe before starting a measuring process. Thus, the external unit is configured to control the measuring probe according to a predetermined process. The external unit may also control the miniaturized primary circuit, possibly switch between a linear and logarithmic configuration. It may also control the detector attenuation and preamplifier gain.. The control of the gain permits the external unit to receive an acceptable signal level whatever the light beam power may be.

According to an embodiment of the invention, the external unit may be connected to a computer, said external unit acting then as a gateway between the measuring probe and said computer.

According to a variant, the measuring probe may be directly connected to a computer which electrically supplies said measuring probe. Such a computer is equipped with conventional software and hardware to process signal coming from the measuring probe. The power supply of the measuring probe can be made via a USB-type connector. An analog-to-digital converter may also be provided for into the miniaturized primary circuit in order to digitally communicate with the computer, otherwise the computer may be provided with a daughter card comprising an analog-to-digital converter.

According to another aspect of the present invention, it is provided for an apparatus for measuring optical power of a light beam produced in a microscope, said microscope being equipped in standard with a slot intended to receive interposition slides. The apparatus comprises a removable measuring probe designed as to be inserted in said slot, near the back pupil of the microscope objective.

According to a non limitative example, the measuring probe may comprise:

- a photodetector arranged in the optical path of the light beam when the measuring probe is inserted in said slot;
- a miniaturized primary circuit connected to said photodetector; and
- a connector for connecting the miniaturized primary circuit with an external unit of control and electricity supply.

The connector may comprise a USB connector conveying an electricity supply line and communication lines.

Advantageously, at least the photodetector and the miniaturized primary circuit are removably disposed on the measuring probe. Thus, a single assembly comprising the photodetector and the miniaturized primary circuit, can be adapted to several measuring probes; each measuring probe constituting a housing designed for sliding into a specific microscope slot.

These and many other features and advantages of the invention will become more apparent from the following detailed description of the preferred embodiments of the invention.

BRIEF DESCRIPTION OF THE DRAWING FIGURES

- Figure 1 shows a schematic representation of a conventional confocal microscope comprising a standard slot;
- Figure 2 shows the microscope of figure 1 together with a measuring device according to the present invention;
- Figure 3 shows a schematic representation of an embodiment according to the present invention.

DETAILED DESCRIPTION

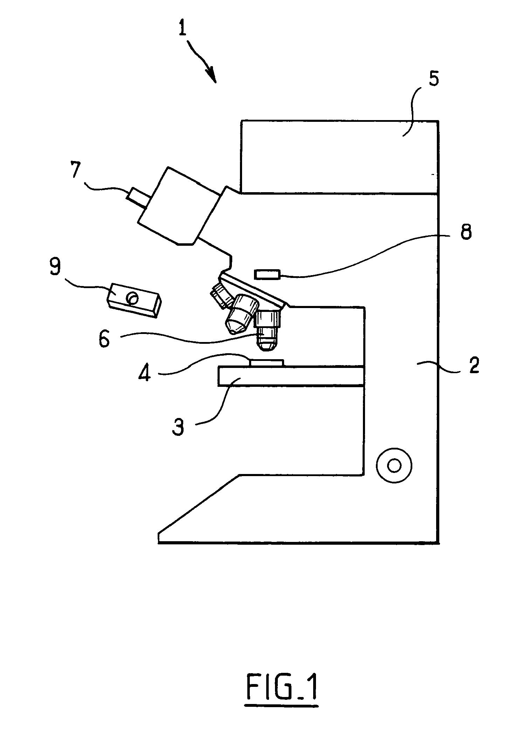

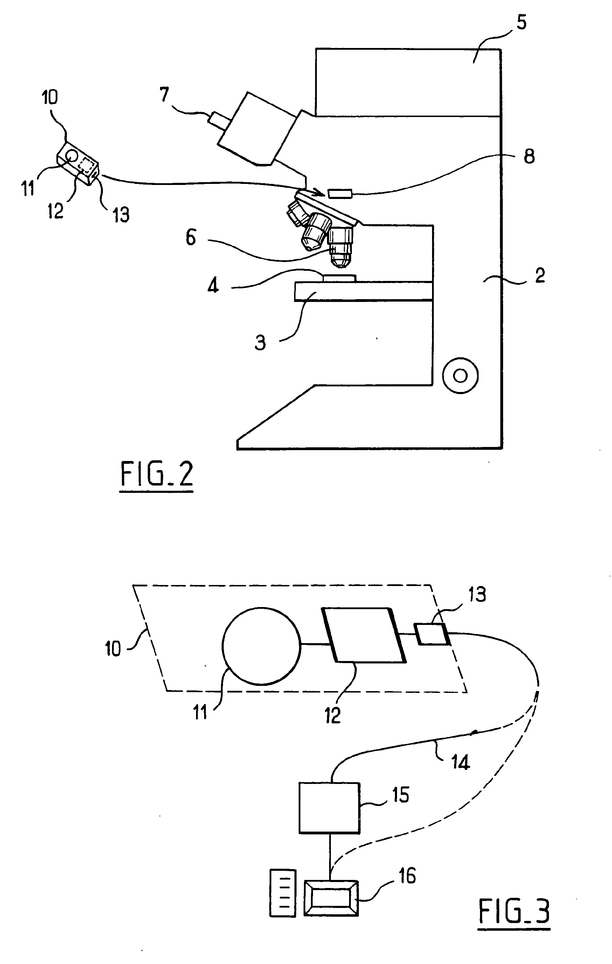

Reference is now made to the drawing figures, in which like numerals refer to like elements throughout the several views. Figure 1 shows a direct-view confocal microscope 1 (it could be an inverted microscope as well) which generally includes a gantry 2 carrying a stage 3 upon which a specimen 4 may be placed. A confocal scan head 5 is placed on top of the gantry. At least one objective lens 6 is disposed above the specimen 4 which can be observed by ocular eyed piece 7. Conventionally, the microscope 1 comprises a slot 8 in which slider 9 can be inserted. Said slider generally includes polarizer or contrast device intended to be placed in the light beam path, near the back pupil of the objective lens 6. The measuring probe 10 according to the present invention is illustrated in figure 2 and is configured to detect light beam passing through the objective lens 6. Said measuring probe 10 is designed to be inserted in the slot 8. To do so, the shape of the measuring probe 10 imitates the slider 9 shape. Measuring probe 10 mainly includes a thin silicon photodiode 11, a miniaturized primary circuit 12, and a USB type electronic connector 13. The miniaturized primary circuit 12 is a CMS circuit comprising a transfer impedance pre-amplifier and selection gain device in response to an external digital instruction.

Figure 3 shows a preferred embodiment of the present invention, in which the measuring device 10 is connected to an external control unit 15 via a cable 14 and the connector 13. The communication between the measuring device and the external control unit conveying following items :

- electricity supply;
- analog output signal;
- saturation line (1bit);
- weak signal line (1bit);
- fixed gain control line (2bits);
- calibration line;
- logical line for log/linear switch

Advantageously, the miniaturized primary circuit 12 comprises a logarithmic pre-amplifier which is intended to extend the dynamic range of the photodiode 11. On another embodiment, this circuit comprises a linear preamplifier. The measuring probe is therefore characterized by high level precision and linearity. The logarithmic signal generated by the logarithmic pre-amplifier is processed within the external unit 15 which can memorize and/or display the power value in $\mu$W for example.

The logarithmic pre-amplifier avoid providing the external unit with means for changing measuring range. According to the present invention, the measuring range extends between pico-ampere and milliampere, precisely into seven orders of magnitude. To do so, the external unit 15 comprises means to transform logarithmic data to its argument. Said transformation means may consist in a microprocessor or a lookup table. A analog-to-digital converter may be provided for in the external unit for the communication with a computer or other.

Precisely, the external control unit 15 is configured to implement following functions :

- electricity supply of the measuring device;
- gain control, on four positions;
- sensitivity correction by displaying wavelength,
- measurement display, in voltage or in $\mu$W/mW (3digits);
- measuring device calibration; and
- analog output for oscilloscope (50 Ohms);

The external control unit is also configured to display the optical power mean, typically updated every 1Hz. Data memorized in the external unit can be sent to a printer or a computer 16.

When using computer 16, the external unit 15 acts as a gateway which allows communication between the measuring device and the computer by deactivating control functions of the external unit 15 over the measuring device. The computer 16 can also be connected to the microscope 1. Thus, it is possible to manage the microscope 1 with respect to information took out of the measuring probe. The computer 16 may therefore control the light beam source or the scan head of the microscope 1 for example. According to another advantageous embodiment of the present invention, computer 16 may be directly connected to a USB-type connector 13 via cable 14 as illustrated in dotted line on figure 3.

Such a disposition of the computer 16 permits to carry out following non limitative functions:

- during the calibration of a modulator provided for in the microscope, the measurement of the optical power can be used to realize an accurate calibration; this function is rather useful during calibration of confocal laser;
- comparison of optical power generated by different light sources of a single microscope;
- capture of time series I(t) to analyse fluctuation of the power excitation; power spectral measure and autocorrelation function may also be implemented; said measures of fluctuation are best achieved with the larger bandwidth configuration of the linear preamplifier and may be done at high frequency (100kHz - 1 Mhz), or at low frequency to analyse sources stability; and
- capture of optical power to create an image representing in each point, the excitation power; said image is preferably drawn up by a confocal software and can be used for diagnostic.

The present invention permits the comparison of the performances on the same microscope in the course of time or between instruments so as to meet a need for standardization or benchmarking of microscopes. The standardization is still not very widespread in microscopy, but it is reasonable to think that it will be essential more and more, in particular under the effect of a medical practice which develops in diagnostic microscopy of fluorescence, which requires standard of performance. The massive introduction of fluorescent chips for the diagnosis also reinforces this need. The benchmarking of the microscopes, and the relative evaluation of the performances of the various bodies, taken separately at side of the excitation and detection, can interest the manufacturers, the integrators, or the users. One can note this tendency, through the appearance in the trade of sample standards of fluorescence: FluorIS or SmartChip of Clondiag, standard balls of calibration for the cytometry of Molecular Probes or FCSC, CalSlide, Slides fluorescent.

Although the various aspects of the invention have been described with respect to preferred embodiments, it will be understood that the invention is entitled to full protection within the full scope of the appended claims.

## Claims

1. A method for measuring optical power of a light beam produced in a microscope, said microscope being equipped in standard with a slot intended to receive interposition slides; the method comprising the step of measuring the optical power by inserting a removable measuring probe in said slot, near the back pupil of the microscope objective.

2. Method of claim 1, wherein the power $P_{sample}$ available on a sample reached by the light beam is the product of the optical power $P_{detector}$ detected by said measuring probe through a diaphragm of same diameter as objective back pupil and the transmission coefficient t of the objective : $P_{sample} = P_{detector} \times t$

3. Method of claim 1, wherein the measuring probe comprises a detection device arranged in the optical path of the light beam when the measuring probe is inserted in said slot.

4. Method of claim 1, wherein the detection device comprises a photodetector.

5. Method of claim 1, wherein the measuring probe comprises a miniaturized primary circuit intended to send the measuring signal from the detection device to an external unit; said external unit being capable of controlling said miniaturized primary circuit and processing measuring signal.

6. Method of claim 5, wherein the miniaturized primary circuit comprises a linear transimpedance pre-amplifier.

7. Method of claim 5, wherein the miniaturized primary circuit comprises a logarithmic pre-amplifier in order to enlarge dynamic range of said detection device.

8. Method according to claims 5-7, wherein the external unit controls the miniaturized primary circuit with a switch between linear and logarithmic preamplifier.

9. Method of claim 1, further comprises the step of placing a removable attenuator upstream from the measuring probe, in the optical path of the light beam.

10. Method of claim 1, further comprises the step of adjusting a diaphragm arranged on a detection device of said measuring probe in order to fit said detection device to the objective pupil diameter.

11. Method of claim 1, wherein the measuring probe is connected to an external unit which electrically supplies said measuring probe.

12. Method of claim 11, wherein the external unit generate an analog measuring signal which is suitable for an oscilloscope.

13. Method of claim 11, wherein the external unit calibrates the measuring probe before starting a measuring process.

14. Method of claim 11, wherein the external unit is connected to a computer, said external unit acting then as a gateway between the measuring probe and said computer.

15. Method of claim 1, wherein the measuring probe is directly connected to a computer which electrically supplies said measuring probe.

16. An apparatus for measuring optical power of a light beam produced in a microscope, said microscope being equipped in standard with a slot intended to receive interposition slides; the apparatus comprising a removable measuring probe designed as to be inserted in said slot, near the back pupil of the microscope objective.

17. Apparatus of claim 16, wherein the measuring probe comprises :

- a photodetector arranged in the optical path of the light beam when the measuring probe is inserted in said slot;
- a miniaturized primary circuit connected to said photodetector; and
- a connector for connecting the miniaturized primary circuit with an external unit of control and electricity supply.

18. Apparatus of claim 17, wherein at least the photodetector and the miniaturized primary circuit are removably disposed on the measuring probe.

19. Apparatus of claim 17, wherein the miniaturized primary circuit comprises a transfer impedance pre-amplifier.

20. Apparatus of claim 17, wherein the miniaturized primary circuit comprises a logarithmic pre-amplifier.

21. Apparatus of claim 16, wherein the measuring probe comprises a diaphragm for fitting said detection device to the objective pupil diameter.

FIG.1

FIG.2

FIG.3

**European Patent Office**

## EUROPEAN SEARCH REPORT

Application Number

EP 06 29 1742

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 132 891 A (LEITER HERBERT) 2 January 1979 (1979-01-02) | 16-21 | INV. G02B21/00 G01J1/42 |
| A | * abstract; figures * | 1-15 | |
| | ----- | | |
| A | US 2005/161593 A1 (KITAHARA AKIHIRO [JP]) 28 July 2005 (2005-07-28) * abstract; figures 3,4 * | 1-21 | |
| | ----- | | |
| D,A | US 2004/238719 A1 (MOELLMANN KYRA [DE] ET AL) 2 December 2004 (2004-12-02) * abstract; figures * | 1-21 | |
| | ----- | | |

TECHNICAL FIELDS SEARCHED (IPC)

G02B
G01J

The present search report has been drawn up for all claims

| Place of search | Date of completion of the search | Examiner |
|---|---|---|
| Munich | 23 February 2007 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1742

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2007

| Patent document cited in search report | | Publication date | Patent family member(s) | | Publication date |
|---|---|---|---|---|---|
| US 4132891 | A | 02-01-1979 | AT | 365792 B | 10-02-1982 |
| | | | AT | 625977 A | 15-06-1981 |
| | | | DE | 2639020 A1 | 02-03-1978 |
| | | | FR | 2363126 A1 | 24-03-1978 |
| | | | GB | 1578156 A | 05-11-1980 |
| | | | JP | 1097409 C | 14-05-1982 |
| | | | JP | 53044041 A | 20-04-1978 |
| | | | JP | 56042849 B | 07-10-1981 |
| US 2005161593 | A1 | 28-07-2005 | NONE | | |
| US 2004238719 | A1 | 02-12-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040238719 A